(19) Europäisches Patentamt
European Patent Office
Office européen des brevets

(11) **EP 2 692 439 A1**

(12) # EUROPEAN PATENT APPLICATION
published in accordance with Art. 153(4) EPC

(43) Date of publication:
**05.02.2014 Bulletin 2014/06**

(21) Application number: **12763718.9**

(22) Date of filing: **28.02.2012**

(51) Int Cl.:
**B01J 35/02** (2006.01)     **C09D 5/14** (2006.01)
**C09D 7/12** (2006.01)     **C09D 133/00** (2006.01)
**C09D 143/00** (2006.01)     **C09D 201/00** (2006.01)

(86) International application number:
**PCT/JP2012/054986**

(87) International publication number:
**WO 2012/132716 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011076373**

(71) Applicants:
• **Panasonic Corporation
Osaka 571-8501 (JP)**
• **The University of Tokyo
Bunkyo-Ku
Tokyo 113-8654 (JP)**

(72) Inventors:
• **YAMASHINA, Daigo
Osaka 540-6207 (JP)**
• **NOMA, Shinjiro
Osaka 540-6207 (JP)**

• **UEDA, Takeshi
Osaka 540-6207 (JP)**
• **MIKI, Shinichiro
Osaka 540-6207 (JP)**
• **HASHIMOTO, Kazuhito
Tokyo 113-8654 (JP)**
• **SUNADA, Kayano
Tokyo 113-8654 (JP)**
• **MINOSHIMA, Masafumi
Tokyo 113-8654 (JP)**
• **MIYAUCHI, Masahiro
Tokyo 113-8654 (JP)**

(74) Representative: **Müller-Boré & Partner
Patentanwälte PartG mbB
Grafinger Straße 2
81671 München (DE)**

(54) **WATER-REPELLENT PHOTOCATALYTIC COMPOSITION AND WATER-REPELLENT PHOTOCATALYTIC COATING FILM**

(57)     Provided is a water-repellent photocatalytic composition showing high stain resistance and also high antimicrobial and antiviral activities even under weak light circumstances for example an indoor space. The water-repellent photocatalytic composition includes a water-repellent resin binder, a photocatalytic material and cuprous oxide. The photocatalytic material and the cuprous oxide are integrated with each other.

EP 2 692 439 A1

Printed by Jouve, 75001 PARIS (FR)

**Description**

**TECHNICAL FIELD**

The present invention relates to water-repellent photocatalytic compositions and water-repellent photocatalytic coating films.

**BACKGROUND ART**

Recently under increasing consciousness on health and hygiene, photocatalytic materials showing stain resistance as well as antimicrobial and antiviral activities even in an indoor space have been studied. In particular, photocatalytic paints superior in stain resistance that are produced by integration of a water-repellent resin binder and a photocatalytic material have been proposed (see, for example, Patent Document 1) and functional materials containing a metal that shows photocatalytic activities such as antimicrobial activity have been proposed (see, for example, Patent Document 2).

**PRIOR ART DOCUMENTS**

**PATENT LITERATURE**

        Patent Document 1: JP 2006-233072 A
        Patent Document 2: JP 11-169726 A

**SUMMARY OF THE INVENTION**

**PROBLEMS TO BE RESOLVED BY THE INVENTION**

However when a water-repellent resin binder and a photocatalytic material are integrated, the photocatalytic material is coated with the water-repellent resin binder. Hence, the surface area of the photocatalytic material in contact with the surface of the coating film decreases, and this causes deterioration of the photocatalytic activity. In addition, there has not yet been developed photocatalytic material that shows its antimicrobial and antiviral activities sufficiently even under weak light for example in an indoor space.

In view of the above problems, the present invention has aimed to propose a water-repellent photocatalytic composition and a water-repellent photocatalytic coating film that can exhibit the high stain resistance as well as high antimicrobial and antiviral activities even in weak light circumstances such as an indoor space.

**MEANS OF SOLVING THE PROBLEMS**

The water-repellent photocatalytic composition according to the present invention includes a water-repellent resin binder, a photocatalytic material, and cuprous oxide. The photocatalytic material and the cuprous oxide are integrated with each other.

In the water-repellent photocatalytic composition, the water-repellent resin binder is preferably an acrylic resin having a side chain containing a polysiloxane skeleton.

In the water-repellent photocatalytic composition, the water-repellent resin binder is preferably an acrylic resin having at least one selected from a main chain and a side chain, each of the main chain and the side chain containing a fluoroalkyl skeleton.

The water-repellent photocatalytic composition preferably includes additionally isocyanate as hardening agent.

The water-repellent photocatalytic composition preferably includes additionally an amino resin as hardening agent.

Preferably in the water-repellent photocatalytic composition, the photocatalytic material has a solid content of 20 to 800 parts by mass relative to 100 parts by mass of a solid content of the water-repellent resin binder and the cuprous oxide has a solid content of 0.1 to 20 parts by mass relative to 100 parts by mass of a solid content of the photocatalytic material.

The water-repellent photocatalytic coating film according to the present invention is prepared by applying the water-repellent photocatalytic composition on a substrate.

## ADVANTAGEOUS EFFECTS OF INVENTION

It is possible according to the present invention to provide a water-repellent photocatalytic composition and a water-repellent photocatalytic coating film that can exhibit the high stain resistance as well as high antimicrobial and antiviral activities even under weak light circumstances such as an indoor space.

## DESCRIPTION OF EMBODIMENTS

Hereinafter, the best mode for carrying out the present invention will be described.

The water-repellent photocatalytic composition according to the present invention includes a water-repellent resin binder, a photocatalytic material and cuprous oxide (copper oxide (I): $Cu_2O$).

The water-repellent resin binder is not particularly limited so long as the water contact angle with the water-repellent photocatalytic coating film (described below) is in the range of 90° to 150°. For example, the following water-repellent acrylic resins can be used.

Typical examples thereof include acrylic resins prepared by copolymerization of (A) one or more monomers having a water-repellent group and a carbon-carbon double bond and (B) one or more monomers having no water-repellent group but having a carbon-carbon double bond.

Examples of the component (A), i.e., the monomer having a water-repellent group and a carbon-carbon double bond, include polysiloxane group-containing monomers and (per)fluoroalkyl group-containing monomers. If the component (A) monomer has a (per)fluoroalkyl group, the monomer component is preferably a (meth)acrylate-based monomer or a vinyl monomer. Typical examples of the (meth)acrylate-based monomers may include trifluoroethyl (meth)acrylate, perfluorodecylethyl (meth)acrylate, perfluorooctylethyl (meth)acrylate, perfluorohexylethyl (meth)acrylate, perfluorobutylethyl (meth)acrylate, and perfluoropolyether (meth)acrylate. Typical examples of the vinyl monomers may include trifluoromethylvinyl, perfluoroethylvinyl, and perfluoroethylethervinyl. The (meth)acrylate, as used herein, means acrylate or methacrylate.

The components (A) may be used alone or in combination of two or more. The content of the component (A) is preferably in the range of 50 to 95 mass % relative to 100 mass % of the acrylic resin prepared by copolymerization of components (A) and (B). When the content of the component (A) is less than 50 mass %, the water-repellent resin binder may not be effectively soluble in organic solvent used for preparation of the water-repellent photocatalytic composition. Alternatively when the content of the component (A) is more than 95 mass %, the water-repellent photocatalytic coating film may become fragile and may have cracks more easily for example by a rapid change in temperature. This makes it difficult for the water-repellent photocatalytic coating film to preserve its moisture resistance, insulating properties, and acid resistance. In view of the above, the content of component (A) in the acrylic resin is more preferably in the range of 60 to 85 mass %.

Examples of the components (B), i.e., the monomers having no water-repellent group but having a carbon-carbon double bond, include preferably (meth)acrylate-based monomers, styrene-based monomers, olefin-based monomers, and vinyl monomers. Typical examples of the (meth)acrylate-based monomers may include methyl (meth)acrylate, 2-ethylhexyl (meth)acrylate, isobornyl (meth)acrylate, glycidyl (meth)acrylate, benzyl (meth)acrylate, stearyl (meth)acrylate, lauryl (meth)acrylate, and 2-hydroxy-3-phenoxypropyl(methane) acrylate. Typical examples of the olefin-based monomers may include ethylene and propylene. Alternatively typical examples of the vinyl monomers may include vinyl chloride and vinylidene chloride.

The components (B) may be used alone or in combination of two or more. The content of the component (B) is preferably in the range of 5 to 50 mass % relative to 100 mass % of the acrylic resin prepared by copolymerization of components (A) and (B). When the content of the component (B) is less than 5 mass %, the water-repellent photocatalytic coating film may become fragile. Alternatively when the content of the component (B) is more than 50 mass %, the water-repellent resin binder may not be effectively soluble in organic solvent used for preparation of the water-repellent photocatalytic composition. In view of the above, it is more preferable that the content of component (B) in the acrylic resin be in the range of 10 to 40 mass %.

The method for copolymerizing components (A) and (B) is not particularly limited and any known method may be used. In other words, any method suitable for polymerizing carbon-carbon double bonds can be used. The acrylic resin preferably has a weight-average molecular weight in the range of 50000 to 800000. The weight-average molecular weight can be determined, for example, by GPC (gel-permeation chromatography) using polystyrene standards. The components (A) and (B) may be copolymerized at random or blockwise.

The water-repellent resin binder is particularly preferably an acrylic resin having a side chain containing a polysiloxane skeleton. Use of such an acrylic resin leads to further improvement of stain resistance and permits preparation of a water-repellent photocatalytic coating film superior in weather resistance and solvent resistance.

Alternatively, acrylic resins having at least one selected from main and side chains each containing a fluoroalkyl skeleton are also used favorable as the water-repellent resin binders. The acrylic resins include acrylic resins having a main chain containing a fluoroalkyl skeleton, acrylic resins having a side chain containing a fluoroalkyl skeleton, acrylic resins having at least one selected from main and side chains each containing a fluoroalkyl skeleton, and acrylic resins having fluoroalkyl groups. With using such an acrylic resin, it is possible to produce a water-repellent photocatalytic coating film further superior in stain resistance and weather resistance.

The photocatalytic material is not particularly limited so long as the substance thereof is irradiated with light of an energy larger than an energy gap between a conduction band and a valence band and thereby the electrons in the valence band are excited to generate free electrons and holes. Typical examples of the photocatalytic materials may include metal oxides (e.g., titanium oxide, tin oxide, tungsten oxide, iron oxide, zinc oxide, chromium oxide, molybdenum oxide, ruthenium oxide, germanium oxide, lead oxide, cadmium oxide, vanadium oxide, niobium oxide, tantalum oxide, manganese oxide, cobalt oxide, rhodium oxide, nickel oxide, rhenium oxide, zirconium oxide, and mixed oxides of these metals) and nitrogen or metal ion-doped metal oxides. Also included may be metal oxides carrying, on the surface, a promotor such as of metal or metal salt, or a photosensitization colorant.

Cuprous oxide shows high antimicrobial and antiviral activity irrespective of whether it has a crystalline or amorphous structure and even when it has a crystalline structure, it also shows high antimicrobial and antiviral activity irrespective of its crystalline structure. Thus, the crystalline structure of cuprous oxide is not particularly limited. The average particle diameter of the cuprous oxide is preferably 0.01 to 10 $\mu$m. The average particle diameter, as used in the present description, means the particle diameter obtained at an integrated value of 50% in the particle size distribution curve determined by a laser diffraction/scattering method.

The photocatalytic material and the cuprous oxide are integrated with each other. Herein, "integrated with each other" means a state in which the photocatalytic material is excited by the excitation light to generate electrons which can travel to the cuprous oxide. The method for integration is not particularly limited, but examples thereof may include the methods of: heating particles of cuprous oxide and particles of the photocatalytic material under agitation in a solution such as water or an organic solvent; kneading particles of cuprous oxide and particles of the photocatalytic material; depositing cuprous oxide on the surface of the particles of the photocatalytic material by chemical reaction; and integrating the photocatalytic material and copper oxide (copper oxide (II): CuO) by one of these methods and subsequently reducing the copper oxide to cuprous oxide by reductive treatment.

Cuprous oxide has a property of being oxidized gradually and changing to copper oxide when left in the air for a long period of time. Since copper oxide has extremely lower antimicrobial and antiviral activities than cuprous oxide, the antimicrobial and antiviral activities may significantly decrease when the cuprous oxide is oxidized. However in a case where the cuprous oxide is integrated with the photocatalytic material, even if the cuprous oxide is oxidized to copper oxide, the copper oxide is reduced back to cuprous oxide because the electron, which is generated in the photocatalytic material excited by excitation light, is injected into the copper oxide. Accordingly when the cuprous oxide is integrated with the photocatalytic material, high antimicrobial and antiviral activities can be obtained even in the air for an extended period of time.

Although photocatalytic material shows high photocatalytic activity (antimicrobial and antiviral activity) in outdoor spaces where the light is strong, the antimicrobial and antiviral activities by cuprous oxide is less affected by the intensity of light. Therefore, the reduction in photocatalytic activity of the photocatalytic material can be compensated when it is placed in an indoor space where the light is weaker.

For example, photocatalytic material and cuprous oxide are added in an organic solvent such as methylethylketone (MEK) and integrated with each other. After that the suspension is stirred for 10 minutes to 2 hours without heatand integrated, or the suspension is stirred for 10 minutes to 2 hours while heated at a temperature of 30 to 120°C and integrated. Thus, a photocatalyst dispersion is prepared. The photocatalyst dispersion is then mixed with a water-repellent resin binder, to give a water-repellent photocatalytic composition.

A compound selected from isocyanate and amino resins is preferably added as hardening agent in the above mixing process.

The isocyanate used is not particularly limited, and examples thereof include aliphatic diisocyanates such as toluene diisocyanate, tetramethylene diisocyanate, hexamethylene diisocyanate, and trimethylhexane diisocyanate; alicyclic diisocyanates such as isophorone diisocyanate and 4,4'-methylene bis(cyclohexylisocyanate); low-molecular weight polyester resins having polyvalent alcohols, such as ethylene glycol, propylene glycol, neopentyl glycol, trimethylolpropane, and other isocyanate-reacting groups or the aqueous adducts or burette-modified derivatives thereof; as well as polymers of diisocyanates and the derivatives thereof blocked with a known blocking agent such as a lower monovalent alcohol or a methylethyl ketoxime. With containing such isocyanate in the water-repellent photocatalytic composition, it is possible to prepare a high-strength water-repellent photocatalytic coating film.

The amino resin is not particularly limited, and examples thereof may include melamine resins, methylol melamine compounds, methylol benzoguanamine compounds, methylol glycoluril compounds, and methylol urea compounds. Also included may be alkoxymethylated melamine compounds, alkoxymethylated benzoguanamine compounds, alkoxymethylated glycoluril compounds, and alkoxymethylated urea compounds. These compounds can be prepared by converting the methylol groups of respective methylol melamine compounds, methylol benzoguanamine compounds, methylol glycoluril compounds, and methylol urea compounds to alkoxymethyl groups. The alkoxymethyl group is not particularly limited in its kind and examples thereof may include methoxymethyl, ethoxymethyl, propoxymethyl, and butoxymethy. With containing such an amino resin in the water-repellent photocatalytic composition, a high-strength water-repellent photocatalytic coating film can be prepared.

In the water-repellent photocatalytic composition, the photocatalytic material preferably has a solid content of 20 to 800 parts by mass relative to 100 parts by mass of a solid content of the water-repellent resin binder. When the photocatalytic material has the solid content of 20 parts by mass or more, it is possible to prepare a water-repellent photocatalytic coating film further improved in antimicrobial and antiviral activity. Alternatively when the photocatalytic material has the solid content of 800 parts by mass or less, it is possible to suppress deterioration of the strength of the water-repellent photocatalytic coating film. Alternatively, in the water-repellent photocatalytic composition, the cuprous oxide preferably has a solid content of 0.1 to 20 parts by mass relative to 100 parts by mass of a solid content of the photocatalytic material. When the cuprous oxide has the solid content of 0.1 part by mass or more, it is possible to prepare a water-repellent photocatalytic coating film that shows further improved antimicrobial and antiviral activity even in indoor spaces where the light is weaker. Alternatively when the cuprous oxide has the solid content of 20 parts by mass or less, it is possible to suppress deterioration of the strength of the water-repellent photocatalytic coating film. If the water-repellent photocatalytic composition contains a hardening agent, the hardening agent preferably has a solid content of 10 to 60 parts by mass, more preferably 15 to 50 parts by mass relative to 100 parts by mass of a solid content of the water-repellent resin binder. When the hardening agent has the solid content of 10 parts by mass or more, it is possible to improve the solvent resistance and the hardness of the water-repellent photocatalytic coating film. Alternatively when the hardening agent has the solid content of 60 parts by mass or less, it is possible to make the water-repellent photocatalytic coating film tougher and thus improve the shock resistance and the weather resistance thereof.

The water-repellent photocatalytic composition thus obtained can be coated on a substrate such as glass plate for example with a bar coater and dried by heating it at a temperature of 80 to 200°C for 1 to 30 minutes, to form a water-repellent photocatalytic coating film. Examples of the substrates include glass plates, various interior parts, and others.

The water-repellent photocatalytic coating film thus formed can exhibit the high stain resistance as well as high antimicrobial, and antiviral activities even under weak light circumstances for example an indoor space. In other words, use of the water-repellent resin binder provides high stain resistance. Mainly the photocatalytic material, among the photocatalytic material and cuprous oxide, in the integrated photocatalytic material provides the high antimicrobial and antiviral activity in outdoor spaces during time when the light is relatively stronger (e.g., daytime), while mainly cuprous oxide provides the high antimicrobial and antiviral activity in indoor spaces where the light is relatively weaker. If such a water-repellent photocatalytic coating film is applied, for example, on an interior part, the film can easily provide stain resistance and antimicrobial and antiviral activities. There may be a concern also in the present invention that the water-repellent resin binder covers the photocatalytic material, the water-repellent resin binder covers the photocatalytic material to reduce the surface area thereof and thereby slightly decreases performances of, for example, gas decomposition and organic matter decomposition which are commonly known. However as the photocatalytic material and cuprous oxide are integrated in the present invention, it is possible to obtain antimicrobial and antiviral activities at a degree more than compensating the reduction of the performance of the photocatalytic material.

EXAMPLES

Hereinafter, the present invention will be described specifically with reference to Examples.

(Example 1)

To give a suspension, 20 parts by mass of rutile titanium oxide ("MT-150A," produced by Tayca Corp.) and 1 part by mass of copper oxide (I) (available from by Wako Pure Chemical Industries Ltd., average particle diameter: 1.5 $\mu$m) were added to 84 parts by mass of methylethylketone (available from Wako Pure Chemical Industries Ltd.). The suspension was heated at a temperature of 90°C for 1 hour while stirred with a stirrer, to give a photocatalyst dispersion in which copper oxide (I) and titanium oxide are integrated. The solid content in the photocatalyst dispersion was 20 mass %, and the solid content of copper oxide (I) was 5 mass % in the total solid content.

An acrylic resin having a side chain containing a dimethylsilicon skeleton and also having fluoroalkyl groups ("ZX-025," available from Fujikasei Kogyo K.K., a dimethylsilicon and hydroxyl group-containing fluorine silicone resin, solid content: 41.2 mass %, hydroxyl value: 120) was used as the water-repellent resin binder. The hardening agent used was a toluene diisocyanate resin ("Takenate D-103N," available from Mitsui Chemicals, Inc., solid content: 75 mass %).

To give a water-repellent photocatalytic composition, 4.7 parts by mass of the photocatalyst dispersion was mixed with 1 part by mass of the water-repellent resin binder and 0.28 part by mass of the hardening agent. In the water-repellent photocatalytic composition, the photocatalytic material has a solid content of 230 parts by mass relative to 100 parts by mass of a solid content of the water-repellent resin binder and the cuprous oxide has a solid content of 5.2 parts by mass relative to 100 parts by mass of a solid content of the photocatalytic material.

The water-repellent photocatalytic composition was stirred for 15 minutes, applied on a glass plate with a bar coater (#10) and dried by heating it at a temperature of 150°C for 10 minutes, to give a coated plate carrying the water-repellent photocatalytic coating film on the surface.

(Example 2)

A water-repellent photocatalytic composition was prepared in a manner similar to Example 1, except that the water-repellent resin binder was an acrylic resin having a side chain containing a polysiloxane skeleton and no fluoroalkyl group ("GS-1015," a hydroxyl group-containing resin available from Toagosei Co., Ltd., solid content: 45 mass %, hydroxyl value: 72). In the water-repellent photocatalytic composition, the photocatalytic material has a solid content of 210 parts by mass relative to 100 parts by mass of a solid content of the water-repellent resin binder, and the cuprous oxide has a solid content of 5.2 parts by mass relative to 100 parts by mass of a solid content of the photocatalytic material.

A coated plate carrying a water-repellent photocatalytic coating film on the surface was prepared in a manner similar to Example 1.

(Example 3)

A water-repellent photocatalytic composition was prepared in a manner similar to Example 1, except that the water-repellent resin binder used was an acrylic resin having fluoroalkyl groups ("Fluonate K-703," available from DIC Corp., a hydroxyl group-containing fluoroplastic, solid content: 60 mass %, hydroxyl value: 66 to 78). In the water-repellent photocatalytic composition, the photocatalytic material has a solid content of 150 parts by mass relative to 100 parts by mass of a solid content of the water-repellent resin binder, and the cuprous oxide has a solid content of 5.2 parts by mass relative to 100 parts by mass of a solid content of the photocatalytic material.

A coated plate carrying a water-repellent photocatalytic coating film on the surface was prepared in a manner similar to Example 1.

(Example 4)

A water-repellent photocatalytic composition was prepared in a manner similar to Example 1, except that the water-repellent resin binder was an acrylic resin having a side chain containing a dimethylsilicon and fluoroalkyl groups ("ZX-022H," available from Fujikasei Kogyo K.K., a dimethylsilicon and hydroxyl group-containing fluorine silicone resin, solid content: 46 mass %, hydroxyl value: 120) and the hardening agent used was a melamine resin ("YUBAN 225," available from by Mitsui Chemicals, Inc., solid content: 60 mass %). In the water-repellent photocatalytic composition, the photocatalytic material has a solid content of 200 parts by mass relative to 100 parts by mass of a solid content of the water-repellent resin binder, and the cuprous oxide has a solid content of 5.2 parts by mass relative to 100 parts by mass of a solid content of the photocatalytic material.

A coated plate carrying a water-repellent photocatalytic coating film on the surface was prepared in a manner similar to Example 1.

(Example 5)

To give a suspension, 20 parts by mass of rutile titanium oxide ("MT-150A," produced by Tayca Corp.) and 0.01 part by mass of copper oxide (I) (available from Wako Pure Chemical Industries Ltd., average particle diameter: 1.5 $\mu$m) were added to 80 parts by mass of methylethylketone (available from Wako Pure Chemical Industries Ltd.). The suspension was heated at a temperature of 90°C, as it is stirred with a stirrer, and kept at the same temperature for 1 hour, to give a photocatalyst dispersion in which copper oxide (I) and titanium oxide are integrated. The solid content in the photocatalyst dispersion was 20 mass %, and the solid content of copper oxide (I) was 0.05 mass % in the total solid content.

A water-repellent photocatalytic composition was prepared in a manner similar to Example 1, except that the photocatalyst dispersion above was used. In the water-repellent photocatalytic composition, the photocatalytic material has a solid content of 200 parts by mass relative to 100 parts by mass of a solid content of the water-repellent resin binder, and the cuprous oxide has a solid content of 0.05 part by mass relative to 100 parts by mass of a solid content of the photocatalytic material.

A coated plate carrying a water-repellent photocatalytic coating film on the surface was prepared in a manner similar to Example 1.

(Example 6)

A water-repellent photocatalytic composition was prepared in a manner similar to Example 1, except that the mixing ratio of the photocatalyst dispersion, water-repellent resin binder, and hardening agent in Example 1 was changed to 0.21 part by mass of the photocatalyst dispersion, 1 part by mass of water-repellent resin binder, and 0.28 part by mass of hardening agent. In the water-repellent photocatalytic composition, the photocatalytic material has a solid content of 10 parts by mass relative to 100 parts by mass of a solid content of the water-repellent resin binder, and the cuprous oxide has a solid content of 5.2 parts by mass relative to 100 parts by mass of a solid content of the photocatalytic material.

A coated plate carrying a water-repellent photocatalytic coating film on the surface was prepared in a manner similar to Example 1.

(Comparative Example 1)

The water-repellent resin binder was an acrylic resin having a side chain containing a dimethylsilicon skeleton and fluoroalkyl groups ("ZX-025," available from Fujikasei Kogyo K.K., a dimethylsilicon and hydroxyl group-containing fluorine silicone resin, solid content: 41.2 mass %, hydroxyl value: 120). The hardening agent used was a toluene diisocyanate resin ("Takenate D-103N," available from Mitsui Chemicals, Inc., solid content: 75 mass %).

One part by mass of the water-repellent resin binder, 0.28 part by mass of the hardening agent, and 3.76 parts by mass of methylethylketone (available from Wako Pure Chemical Industries Ltd.) were mixed, to give a water-repellent composition.

The water-repellent composition was stirred for 15 minutes, applied on a glass plate with a bar coater (#10), and dried by heating it at a temperature of 150°C for 10 minutes, to give a coated plate carrying a water-repellent coating film on the surface.

(Comparative Example 2)

To give a suspension, 20 parts by mass of rutile titanium oxide ("MT-150A," available from Tayca Corp.) was added to 84 parts by mass of methylethylketone (available from Wako Pure Chemical Industries Ltd.) and the mixture was agitated. The suspension was heated at a temperature of 90°C for 1 hour while stirred with a stirrer, to give a photocatalyst dispersion. The solid content of the photocatalyst dispersion was 20 mass %.

The water-repellent resin binder was an acrylic resin having a side chain containing a dimethylsilicon skeleton and fluoroalkyl groups ("ZX-025," available from Fujikasei Kogyo K.K., a dimethylsilicon and hydroxyl group-containing fluorine silicone resin, solid content: 41.2 mass %, hydroxyl value: 120). The hardening agent used was a toluene diisocyanate resin ("Takenate D-103N," available from Mitsui Chemicals, Inc., solid content: 75 mass %).

One part by mass of the water-repellent resin binder and 0.28 part by mass of the hardening agent were mixed with 4.7 parts by mass of the photocatalyst dispersion, to give a water-repellent photocatalytic composition.

The water-repellent photocatalytic composition was stirred for 15 minutes, applied on a glass plate with a bar coater (#10), and dried by heating it at a temperature of 150°C for 10 minutes, to give a coated plate carrying a water-repellent photocatalytic coating film on the surface.

(Comparative Example 3)

A photocatalyst dispersion in which copper oxide (I) was integrated with titanium oxide was prepared in a manner similar to Example 1.

The hydrophilic resin binder used was a hydrophilic resin having hydroxyl groups connected to the siloxane bond ("Furessera R," available from Panasonic Corp., a silicone-based clear paint, solid content: 1 mass %).

To give a hydrophilic photocatalytic composition, 0.75 part by mass of the photocatalyst dispersion and 10 parts by mass of the hydrophilic resin binder were mixed.

The hydrophilic photocatalytic composition was stirred for 15 minutes, applied on a glass plate with a bar coater (#30), and dried by heating it at a temperature of 150°C for 10 minutes, to give a coated plate carrying a hydrophilic photocatalytic coating film on the surface.

(Evaluation)

The coated plates obtained in Examples 1 to 6 and Comparative Examples 1 to 3 were subjected to the following tests (1) to (4).

(1) Water contact angle

The water contact angle when a water drop was placed on the coating film surface of the coated plate was determined, using a contact angle meter (DM500) available from Kyowa Interface Science Co., Ltd.

(2) Repellency to oil-based marker

A character was written on the surface of the coating film of the coated plate with an oil-based marker Magic Ink (M-500T1, available from Teranishi Chemical Industry Co., Ltd.). The coated plate repellent to the ink is designated by "○", while the coated plate not repellent to the ink is designated by "×".

(3) Evaluation of antimicrobial activity

The antimicrobial activity of each coated plate was evaluated using Escherichia coli according to JIS R1702. The irradiation condition was 1000 lx (fluorescent lamp) for 4 hours. The antimicrobial activity R (antimicrobial) was calculated according to the following formula:

$$R(antimicrobial)=Log(B/C)$$

R(antimicrobial): antimicrobial activity of coated plate under the irradiation condition
B: viable cell count on glass plate after irradiated with light under the irradiation condition
C: viable cell count on coated plate after irradiated with light under the irradiation condition

(4) Evaluation of antiviral activity

The antiviral activity was evaluated using bacteriophage according to JIS R1702. The irradiation condition used was as follows: a drop of a previously prepared phage solution ($1\times10^9$ PFU/mL) was placed on the glass plate or the coated plate, and the plate was covered with an OHP film and irradiated with light at 1000 lx (fluorescent lamp) for 2 hours. After the irradiation, the phage solution on the glass plate or the coated plate was recovered and mixed with Escherichia coli for infecting the phage with the Escherichia coli. After the cultivation of the Escherichia coli, the number of plaques of the Escherichia coli-infected phage was counted. The virus inactivation rate R(antiviral) was calculated according to the following formula:

$$R(antiviral)=Log(D/E)$$

R(antiviral): virus inactivation rate of coated plate under the irradiation condition
D: the number of plaques on the glass plate after irradiated with light under the irradiation condition
E: the number of plaques on the coated plate after irradiated with light under the irradiation condition

(Results)

Evaluation results of the tests (1) to (4) are summarized in Table 1.

[Table 1]

|  | (1) | (2) | (3) | (4) |
|---|---|---|---|---|
|  | Water contact angle (°) | Repellency to oil-based marker | R (antimicrobial) | R (antiviral) |
| Example 1 | 105.5 | ○ | >6 | >6 |
| Example 2 | 101 | ○ | >6 | >6 |

(continued)

|  | (1) | (2) | (3) | (4) |
|---|---|---|---|---|
| Example 3 | 102.2 | ○ | >6 | >6 |
| Example 4 | 104.8 | ○ | >6 | >6 |
| Example 5 | 105.8 | ○ | 4 | 3 |
| Example 6 | 106.1 | ○ | 4 | 3 |
| Comparative Example 1 | 104.8 | ○ | 0 | 0 |
| Comparative Example 2 | 105.3 | ○ | 1 | 1 |
| Comparative Example 3 | 5.2 | × | >6 | >6 |

Comparative Example 1 confirms that the water-repellent coating film, which contains no photocatalytic material or cuprous oxide, has low antimicrobial and antiviral activities. Further Comparative Example 2 confirms that the water-repellent photocatalytic coating film shows lower antimicrobial and antiviral activities because it contains a photocatalytic material but does not contain the cuprous oxide which is integrated with the photocatalytic material. Furthermore Comparative Example 3 confirms that the hydrophilic photocatalytic coating film has a small water contact angle and is not repellent to Magic ink and has poor stain resistance because it contains a hydrophilic resin binder in addition to a photocatalytic material and cuprous oxide which are integrated with each other.

In contrast, the photocatalytic coating films of Examples 1 to 6 have a larger water contact angle and are repellent to Magic ink and indicate their high stain resistance. Examples 1 to 4 further confirm that high antimicrobial and antiviral activities are obtained. Although the photocatalytic coating film of Example 5 contains a smaller amount of cuprous oxide and that of Example 6 contains a smaller amount of the photocatalytic material, they have antimicrobial and antiviral activities higher than those of Comparative Examples 1 and 2.

**Claims**

1. A water-repellent photocatalytic composition, comprising a water-repellent resin binder, a photocatalytic material, and cuprous oxide, wherein the photocatalytic material and the cuprous oxide are integrated with each other.

2. The water-repellent photocatalytic composition according to claim 1, wherein
the water-repellent resin binder is an acrylic resin having a side chain containing a polysiloxane skeleton.

3. The water-repellent photocatalytic composition according to claim 1, wherein
the water-repellent resin binder is an acrylic resin having at least one selected from a main chain and a side chain, each of the main chain and the side chain containing a fluoroalkyl skeleton.

4. The water-repellent photocatalytic composition according to any one of claims 1 to 3, further comprising isocyanate as hardening agent.

5. The water-repellent photocatalytic composition according to any one of claims 1 to 3, further comprising an amino resin as hardening agent.

6. The water-repellent photocatalytic composition according to any one of  claims 1 to 5, wherein:

   the photocatalytic material has a solid content of 20 to 800 parts by mass relative to 100 parts by mass of a solid content of the water-repellent resin binder; and
   the cuprous oxide has a solid content of 0.1 to 20 parts by mass relative to 100 parts by mass of a solid content of the photocatalytic material.

7. A water-repellent photocatalytic coating film prepared by applying the water-repellent photocatalytic composition according to any one of claims 1 to 6 on a substrate.

**Amended claims under Art. 19.1 PCT**

**1.** Currently amended). A water-repellent photocatalytic composition, comprising a water-repellent resin binder, a photocatalytic material, and cuprous oxide, wherein:

the photocatalytic material and the cuprous oxide are integrated with each other;
the water-repellent resin binder is an acrylic resin prepared by copolymerization of (A) one or more monomers having a water-repellent group and a carbon-carbon double bond and (B) one or more monomers having no water-repellent group but having a carbon-carbon double bond;
the content of the component (A) is in the range of 50 to 95 mass % relative to 100 mass % of the acrylic resin prepared by copolymerization of components (A) and (B); and
the content of the component (B) is in the range of 5 to 50 mass % relative to 100 mass % of the acrylic resin prepared by copolymerization of components (A) and (B).

**2.** The water-repellent photocatalytic composition according to claim 1, wherein
the water-repellent resin binder is an acrylic resin having a side chain containing a polysiloxane skeleton.

**3.** The water-repellent photocatalytic composition according to claim 1, wherein
the water-repellent resin binder is an acrylic resin having at least one selected from a main chain and a side chain, each of the main chain and the side chain containing a fluoroalkyl skeleton.

**4.** The water-repellent photocatalytic composition according to any one of claims 1 to 3, further comprising isocyanate as hardening agent.

**5.** The water-repellent photocatalytic composition according to any one of claims 1 to 3, further comprising amino resin as hardening agent.

**6.** The water-repellent photocatalytic composition according to any one of claims 1 to 5, wherein:

the photocatalytic material has a solid content of 20 to 800 parts by mass relative to 100 parts by mass of a solid content of the water-repellent resin binder; and
the cuprous oxide has a solid content of 0.1 to 20 parts by mass relative to 100 parts by mass of a solid content of the photocatalytic material.

**7.** A water-repellent photocatalytic coating film prepared by applying the water-repellent photocatalytic composition according to any one of claims 1 to 6 on a substrate.

<table>
<tr><td colspan="2" align="center">**INTERNATIONAL SEARCH REPORT**</td><td>International application No.<br/>PCT/JP2012/054986</td></tr>
</table>

A. CLASSIFICATION OF SUBJECT MATTER
*B01J35/02*(2006.01)i, *C09D5/14*(2006.01)i, *C09D7/12*(2006.01)i, *C09D133/00*
(2006.01)i, *C09D143/00*(2006.01)i, *C09D201/00*(2006.01)i

According to International Patent Classification (IPC) or to both national classification and IPC

B. FIELDS SEARCHED

Minimum documentation searched (classification system followed by classification symbols)
B01J35/02, C09D5/14, C09D7/12, C09D133/00, C09D143/00, C09D201/00

Documentation searched other than minimum documentation to the extent that such documents are included in the fields searched
Jitsuyo Shinan Koho          1922-1996    Jitsuyo Shinan Toroku Koho   1996-2012
Kokai Jitsuyo Shinan Koho    1971-2012    Toroku Jitsuyo Shinan Koho   1994-2012

Electronic data base consulted during the international search (name of data base and, where practicable, search terms used)
JSTPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X<br/>Y | JP 7-222928 A   (Toto Ltd.),<br/>22 August 1995 (22.08.1995),<br/>paragraphs [0001], [0054]; examples 2, 5, 6<br/>& US 5853866 A           & US 6027797 A<br/>& US 6210779 B1          & US 6268050 B1<br/>& US 6294246 B1          & US 6294247 B1<br/>& EP 684075 A1           & WO 1995/015816 A1 | 1,7<br/>2-5 |
| Y | JP 2009-18231 A  (Achilles Corp.),<br/>29 January 2009 (29.01.2009),<br/>claims 1, 6; paragraphs [0024], [0025], [0037],<br/>[0042]; tables 1, 2; examples 1 to 12<br/>(Family: none) | 1-7 |

☒  Further documents are listed in the continuation of Box C.          ☐  See patent family annex.

\* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
15 May, 2012 (15.05.12)

Date of mailing of the international search report
29 May, 2012 (29.05.12)

Name and mailing address of the ISA/
Japanese Patent Office

Facsimile No.

Authorized officer

Telephone No.

Form PCT/ISA/210 (second sheet) (July 2009)

**INTERNATIONAL SEARCH REPORT**

International application No.

PCT/JP2012/054986

C (Continuation).    DOCUMENTS CONSIDERED TO BE RELEVANT

| Category* | Citation of document, with indication, where appropriate, of the relevant passages | Relevant to claim No. |
|---|---|---|
| Y | Hisashi HARADA, "Photocatalytic reactions of titanium oxide loaded by copper compounds", Electrochemistry, 07 December 1989 (07.12.1989), vol.57, no.12, pages 1159 to 1162, ISSN:1344-3542 | 1-7 |
| Y | JP 2009-233590 A (National Institute of Advanced Industrial Science and Technology), 15 October 2009 (15.10.2009), paragraphs [0012], [0016] (Family: none) | 1-7 |
| Y | SHIFU, C. et al, Study on the Photocatalytic Activity of p-n Junction Photocatalyst Cu2O/ TiO2, Journal of Nanoscience and Nanotechnology, 2009.07.01, Vol.9, No.7, p.4397-4403, doi: 10.1166/jnn.2009.M67 | 1-7 |
| A | JP 2006-233072 A (Pialex Technologies Corp.), 07 September 2006 (07.09.2006), entire text (Family: none) | 1-7 |
| A | JP 2005-97400 A (Chugoku Marine Paints, Ltd.), 14 April 2005 (14.04.2005), entire text (Family: none) | 1-7 |
| A | JP 2002-308620 A (Titan Kogyo, Ltd.), 23 October 2002 (23.10.2002), entire text (Family: none) | 1-7 |

Form PCT/ISA/210 (continuation of second sheet) (July 2009)

## INTERNATIONAL SEARCH REPORT

| | International application No. |
|---|---|
| | PCT/JP2012/054986 |

**Box No. II**  **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**  **Observations where unity of invention is lacking (Continuation of item 3 of first sheet)**

This International Searching Authority found multiple inventions in this international application, as follows:
    The invention of claim 1 does not have novelty and a special technical feature since the invention is disclosed in the document 1, and consequently, the invention of claim 1 does not comply with the requirement of unity.
    The inventions of claims indicated below are relevant to a main invention group.
    Claims 1, 2, 4, 6 and 7
    Document 1: JP 7-222928 A  (Toto Ltd.), 22 August 1995 (22.08.1995),

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 692 439 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006233072 A
- JP 11169726 A